# EUROPEAN PATENT APPLICATION

(11) **EP 2 383 859 A1**
(43) Date of publication of application: **02.11.2011**
(21) Application number: 10161235.6
(22) Date of filing: 28.04.2010
(51) Int. Cl.: H02J 7/00

(54) **Fast rechargeable electric system for stand-alone power sources**

(71) Applicant: Brucchi, Fabio, 00189 Roma (IT)
(72) Inventor: Brucchi, Fabio, 00189 Rome (IT); Gentili, Enrico, 0133 Rome (IT); Valelli, Fabiano, 22060 Campione d'Italia (CH); Valelli, Andrea, 00131 Rome (IT)

(57) **Abstract**

The present invention relates to an Electro-Mechanical system capable to recharge in short times: seconds or minutes, an electric storage unit, which remains electrically charged, to operate as power source for electric or electronic equipments, for long times: days, weeks or months. This Electro-mechanical system comprises: a converter unit, 1, typically mounted aboard of a vehicle, 4, able to generate the high current intensity and to provide the power conversion. A power connectors system, 3, which allows mechanical and electrical connection between said converter unit, 1, and the energy storage unit, 2. An energy storage unit, 2, enclosed into a box, an housing or a container, 36, provided with special bus-bar terminations, 33, to match with the said power connector, 3, and also provided with adequate sensors, 24.

## Description

The present invention relates to an Electro-Mechanical system which is capable to recharge, in very short times, an electric energy storage unit. This unit, once recharged, can supply stand-alone and isolated power sources. This system consists of an electronic converter unit, a mechanical power connectors system, and an high capacity electrostatic energy storage unit.

This system is therefore suitable in all cases in which, because of economical and/or technical reasons, the Stand-alone power source can be reached (and consequently recharged), for few seconds or minutes at a time.

Several electronic applications (like remote stations for monitoring and measurements, data transmitters, data logger, traking systems, waste management...) are typically located in boondocks or in sites with not easy access points. The above mentioned state-of-the-art applications use battery systems which, unfortunately, are very sensitive to low temperatures, mechanical shocks, humidity and, more in general, to harsh environments. A failure of the power supply, obviously, leads to electronic application failure; therefore, frequent maintenance with battery replacement within few years is mandatory for such applications, with its increased costs.

The present invention seeks to provide a solution for the above mentioned issue related to battery systems for all cases in which, because of technical and/or economical reasons, is demanded to an operator (and/or to a machine) reaching the electronic equipment daily, weekly or monthly based (i.e. data downloading of monitoring systems once per week, or traking system for waste management once per day, etc...).

According to the present invention, there is provided an Electro-mechanical system for operation in multiple applications, comprising: a converter unit, a power connectors system and an electric energy storage unit.

The mentioned converter unit, which may also be installed aboard a Vehicle or a machine, provides the generation and the fast transfer of the requested quantity of charge which correctly supplies the electric energy storage unit at the specific voltage level.

The power connectors system allows an high quality electrical connection between the mentioned power converter and the energy storage system, in order to prevent any possible self-heating and any increase of the electric resistance. It may be consist of one (or more than one) extensible (telescopic, or tilting, or rotating) mechanical arm(s), each of it having a mechanical jaw at its termination. This mechanical jaw is electrically isolated from the rest of the structure, and it works, at the same time, as mechanical support and as good electric connection, thanks to the high clamping pressure.

The high efficiency electric energy storage unit, is installed at the user point and may consists of one or multiple electrostatic energy storage system(s), like: ultracapacitor, supercapacitor, pseudocapacitor and the like; alternatively, said electric storage unit may use one or multiple electrochemical energy storage unit like: lithium capacitor, nano-structured lithium battery and the like. The storage unit is enclosed into a box which has high grade of electrical, mechanical and chemical isolation and is provided with adequate sensors (voltage, temperature, current, humidity and whatever necessary to monitor and control). The dimensioning of the system (capacitance, voltage, equivalent series resistance) depends on the application (total power absorption, current leakages, voltage levels of the power supply, etc...) and on the frequency with which the stand-alone station can be reached, and then recharged.

Therefore, a vehicle (or in general a machine) which has to reach an electronic equipment once per day, once per week, or once per month, can accomodate a power converter aboard and a connectors system. Once the vehicle (or, in general, the machine) reach the stand-alone station, the extensible (or rotating, or tilting) arm(s) connector(s) provided with mechanical jaw(s), grabs the electric terminations positioned externally to the mechanical box of the electric storage unit and start a very fast recharge process. Within few seconds or minutes, the quantity of charge is transferred to the storage unit and it allows to supply the energy to the electronic equipment at the right voltage level for days, weeks or even months, till the next process of recharge.

Embodiments of the present invention with now be described, by way of example, with reference to the accompanying drawings, in which:
Figure 1 is a general schematic of the Fast rechargeable electric System for stand-alone Power Sources in the basic configuration.

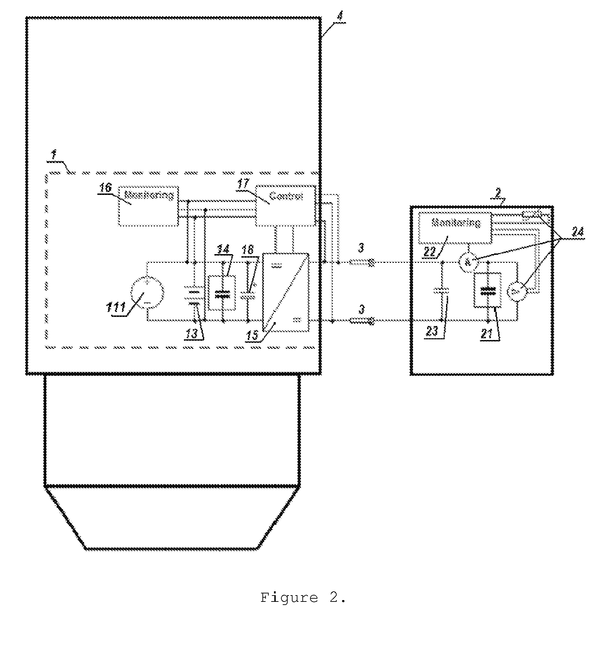

Figure 2 is a general schematic of an alternative embodiment of the Fast rechargeable electric system for stand-alone power sources, in which the converter unit installed aboard of a vehicle (or a machine) has a DC input source.

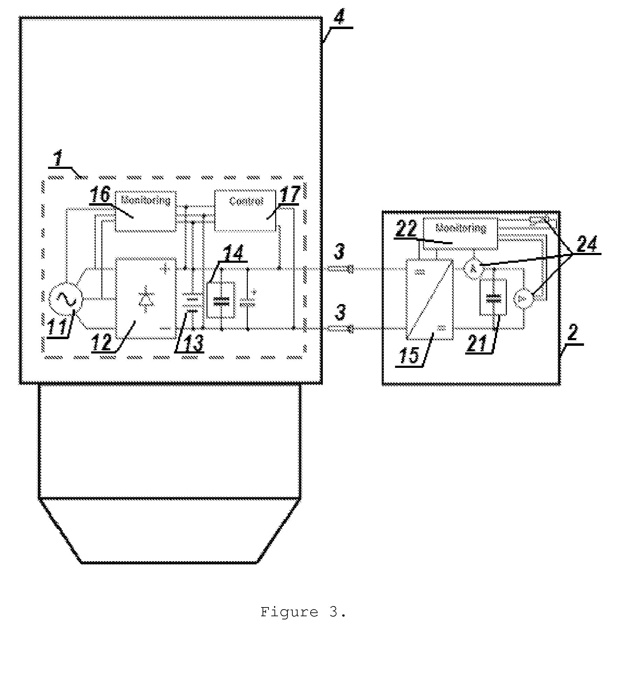

Figure 3 is a general schematic of an alternative embodiments of the electro-mechanical system in which the said DC to DC converter is installed in the same housing, box or container of the energy storage unit.

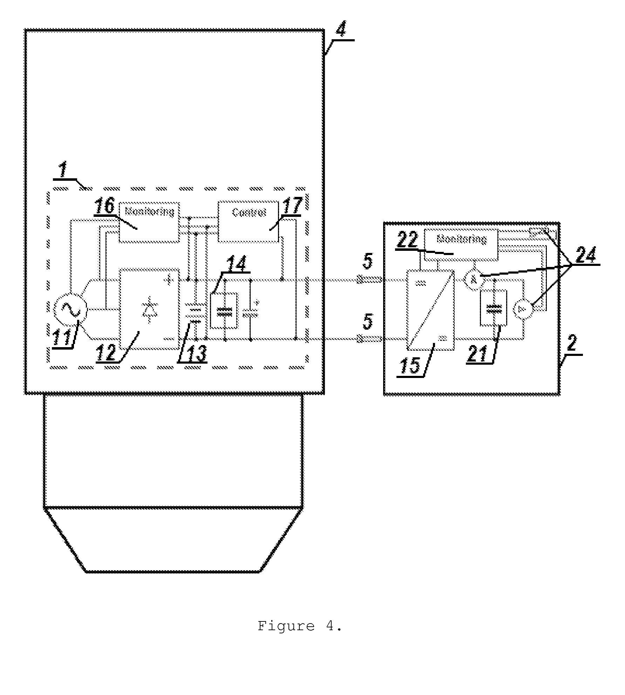

Figure 4 is a general schematic of an alternative embodiments of the electro-mechanical system in which the power connectors system is installed in the same housing, box or container of the energy storage unit.
Figure 5 is a side view of the power connectors system and the garbage box used in a waste management application with integrated traceability system, which contains the said energy storage unit according to the present invention.
Figure 6 is a detailed view of the power connectors system where are shown the mechanical jaw, the mentioned mechanical arm, the pressure spring, the grab system and wiring.
Figure 7 is a close-up view of the mechanical jaw and power connectors system.
Figure 8 is a detailed view of the power connectors system and of the electric energy storage unit, mounted, in the specific case, inside a garbage box in a waste management application with integrated traceability system.

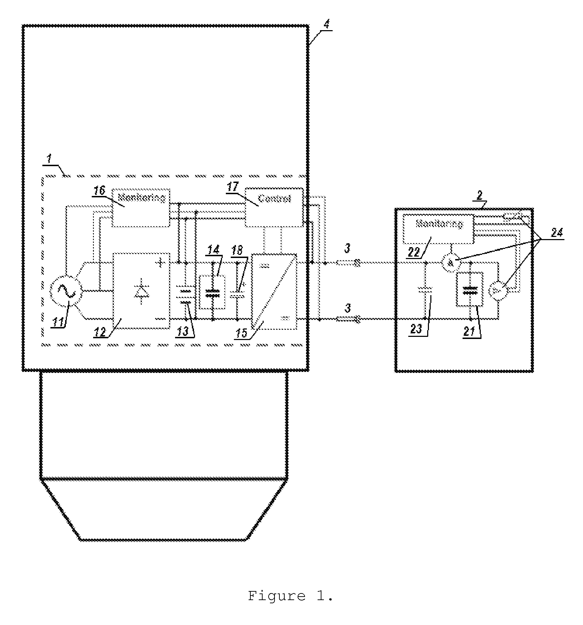

For purpose of illustration, this invention will be described with reference to a waste management application with integrated traceability system, but it is applicable as power supply to other systems and electronic equipments, like stations for monitoring and measurements, data transmitters, data logger et similia. As shown in Figure 1, the converter unit is installed into a garbage truck, 4, in which the current generated from an adequately dimensioned alternator, 11, is rectified, 12, and stored into a battery pack, 13, having in parallel ultracapacitors (or the like), 14, and fast response film capacitors, 18, to provide the correct peak current and to prevent battery ageing. The rectified supply current, feed a DC to DC converter, 15, which provide the correct constant output current, until the stored quantity of charge reaches a specific voltage level. This is in few seconds or minutes.

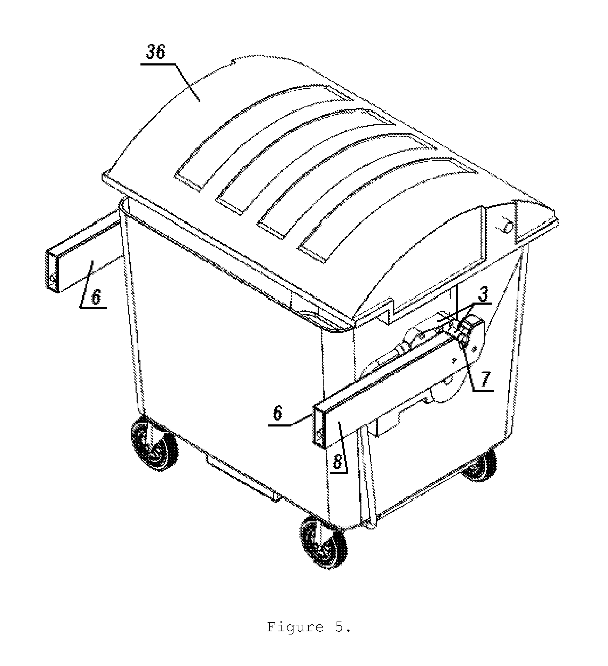

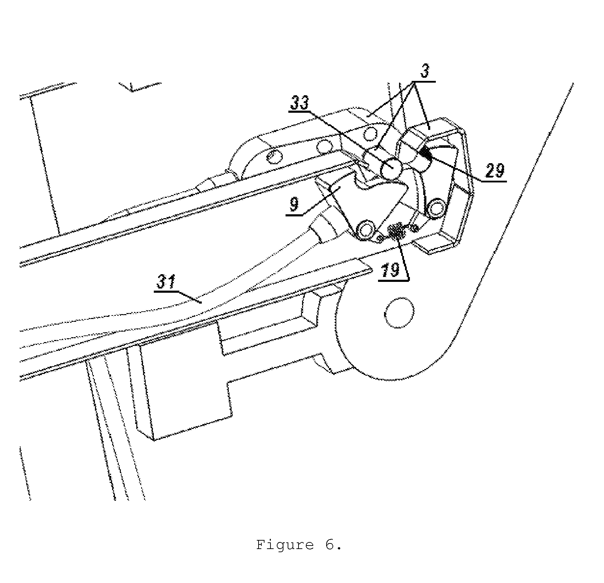

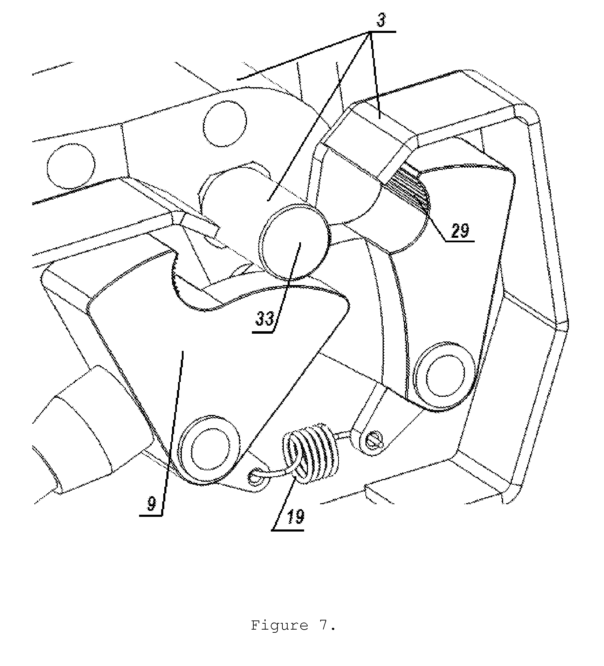

Figures 5, 6 and 7 show the power connectors system in a waste management application with integrated traceability system. In this case, the mechanical arm, 6, with the mentioned mechanical jaw, 9, is installed in the rear (or in a side) of a garbage truck. The power connectors system, consists of two mechanical arms, 6, each of it has a mechanical jaw, 9, at its termination. These mechanical jaws, 9, together with terminations, 33, are electrically isolated from the rest of the structure, 8, and they work at the same time as mechanical support and as good electric connectors thanks to the high clamping pressure applied on two bus bar terminations, 33, installed in the garbage box, 36. The mechanical jaws also have a tooth shaped profile, 29, which allows a better mechanical clamping and a reduced electrical resistance. Figures 6 and 7 show the bus-bars terminations, 33, and wiring 39.

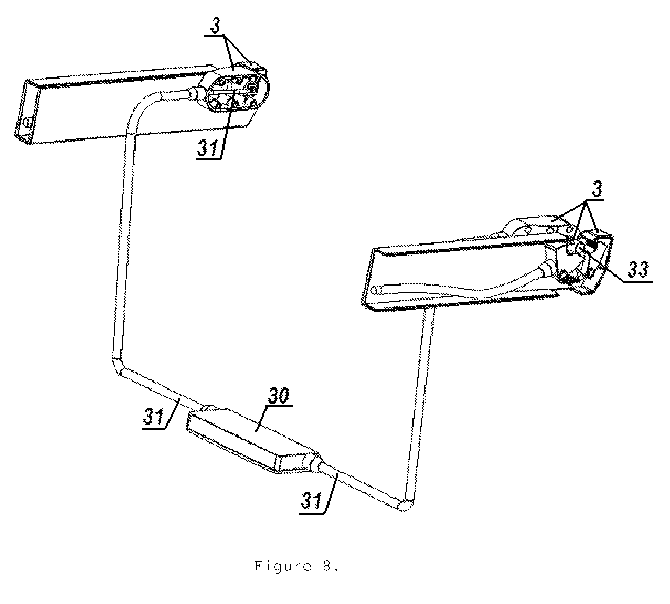

Figure 8 shows the high efficiency electric energy storage unit which consists of ultracapacitors and film capacitors enclosed into a box, 30, having high grade of electrical, mechanical and chemical isolation. This system is connected by large wires, 31, and provided with integrated voltage sensors, current sensor and thermistor for temperature monitoring, 24.

## Claims

1. An Electro-Mechanical system capable to recharge in short times: seconds or minutes, an electric storage unit, which remains electrically charged, to operate as power source, for long times: days, weeks or months, comprising:
one, or more than one, converter unit, 1, consisting of a motor-generator or an alternator, 11, an AC to DC converter, 12, mounted aboard of a vehicle or a machine capable of (self-)movement, 4, which provides adequately high intensity of electric current to an electric storage unit, 2. Said converter unit may also be provided with electro-chemicals batteries, 13, with electric double layer capacitors, or ultracapacitors, or pseudocapacitors, or lithium capacitors cells or the like, 14, in parallel between the AC to DC converter, 12, and the DC to DC converter, 15.
One, or more than one, power connector(s) mounted aboard of a vehicle, or a machine capable of (self-)movement, 4, consisting of extensible telescopic, or rotating, or tilting mechanical arms, 6; each of these arms has a mechanical jaw, 9, at its terminations. This mechanical jaw, 9 (and 7), may be electrically isolated from the rest of the structure, 8, and works at the same time, as mechanical support and as good electric connector thanks to the high clamping pressure applied to a bus bar termination, 33. The mechanical jaw, 9, is provided with a spring, 19, used to increase the mechanical clamping force and may also have a toothed shape, 29, to improve mechanical clamping force and decrease the electrical resistance.
One, or more than one, high capacity electrostatic energy storage unit consisting of a multitude of series parallel electric-double layer capacitors, or ultracapacitors, or supercapacitors, or pseudocapacitors, or lithium capacitors cells and the like, 21; said storage unit is enclosed into an housing, box or container, 30, having adequate grade of electrical, mechanical and chemical isolation and provided with adequate wiring, 31, and connections, 33, to match with the said power connectors system, 3, and provided also with sensors: voltage, temperature, current, humidity and whatever necessary to be monitored and controlled, 24.

2. An Electro-mechanical system according to claim 1, wherein said converter unit, 1, is a DC to DC converter supplied by a DC source, 111; battery, Fuel Cell, PV Panels and the like, and it is mounted aboard a vehicle or a machine capable of (self-) movement, 4. Said converter unit, 1, may also be provided with electric-double layer capacitors, or ultracapacitors, or supercapacitors, or pseudocapacitors, or lithium capacitors and the like, 14.

3. An Electro-mechanical system, according to claim 1 or 2, wherein said DC to DC converter, 15, is enclosed into the same housing, box or container which contains the said energy storage unit, 2.

4. An Electro-mechanical system according to claim 1, 2 or 3, wherein into the said energy storage unit, 2, the said electric-double layer capacitors, or ultracapacitors, or supercapacitors, or pseudocapacitors, or lithium capacitors, 21, are replaced by electrochemical batteries, nano-structure lithium batteries and the like.

5. An Electro-mechanical system according to claim 1, 2, 3 or 4 wherein, said power connectors system, 3, is installed in the same housing, box or container, which contains the said energy storage unit, 5, and the bus-bar terminations, 33, are installed in the said vehicle or machine capable of (self-)movement, 4.

6. An electro-mechanical system according to claim 1, wherein the said converter unit, 1, is installed inside a garbage truck; the said power connectors system, 3, is installed in the rear, or in a side, of the mentioned garbage truck and the said energy storage unit, 2, is installed inside a garbage bin or box, 36, having one or more bus-bar terminations, 33.

7. An electro-mechanical system according to claim 1, wherein the said converter unit, 1, is mounted into a car or a van, the power connectors system, 3, is replaced by a standard output power plug, and the said energy storage unit is mounted into an housing, a box or a container, in which is mounted the corresponding standard input power plug.
